(19) Europäisches Patentamt

European Patent Office

Office européen des brevets

(11) **EP 4 563 369 B1**

(12) **EUROPEAN PATENT SPECIFICATION**

(45) Date of publication and mention
of the grant of the patent:
**04.03.2026 Bulletin 2026/10**

(21) Application number: **24219367.0**

(22) Date of filing: **11.11.2021**

(51) International Patent Classification (IPC):
*B44C 5/04* *(2006.01)*    *B32B 27/00* *(2006.01)*
*B32B 3/30* *(2006.01)*    *B32B 27/30* *(2006.01)*
*C08J 7/046* *(2020.01)*    *C08J 7/04* *(2020.01)*
*B05D 5/02* *(2006.01)*    *B44F 1/02* *(2006.01)*
*B44F 1/06* *(2006.01)*    *B05D 3/06* *(2006.01)*
*B05D 3/02* *(2006.01)*

(52) Cooperative Patent Classification (CPC):
**C08J 7/0427; B05D 3/067; B05D 5/02; B44C 5/04;**
**B44F 1/02; C08J 7/046;** B05D 3/0209;
C08J 2323/02; C08J 2433/08

(54) **DECORATIVE SHEET**

DEKORFOLIE

FEUILLE DÉCORATIVE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.12.2020 JP 2020218590**

(43) Date of publication of application:
**04.06.2025 Bulletin 2025/23**

(62) Document number(s) of the earlier application(s) in
accordance with Art. 76 EPC:
**21914998.6 / 4 101 640**

(73) Proprietor: **TOPPAN INC.**
**Tokyo 110-0016 (JP)**

(72) Inventor: **AKUTSU, Erika**
**Tokyo, 110-0016 (JP)**

(74) Representative: **Hoffmann Eitle**
**Patent- und Rechtsanwälte PartmbB**
**Arabellastraße 30**
**81925 München (DE)**

(56) References cited:
WO-A1-2014/034850    WO-A1-2016/021655
JP-A- 2016 099 671    JP-A- 2017 128 634
JP-A- 2017 171 794    JP-A- 2019 066 643
JP-A- 2020 111 715    KR-A- 20200 025 050
KR-A- 20200 031 282    KR-A- 20200 059 905
KR-A- 20200 061 292    US-A1- 2015 354 132
US-A1- 2016 152 833    US-A1- 2020 024 439
US-B1- 6 663 952

**Description**

Technical Field

The present invention relates to a decorative sheet used for surface decoration or the like for the interior/exterior finish, fittings, furniture, furnishing materials, flooring materials, and the like of buildings.

Background Art

In the buildings described above, a decorative sheet imparts design properties or durability to the surface. Therefore, the decorative sheet is commonly and widely used by being pasted to the surface of wood materials, woody boards, metal plates, non-combustible boards, paper substrates, resin substrates, or the like through an adhesive to form a decorative plate.

The imparting of the design properties is selected according to the requirements or applications from the range from those in which patterns, such as wood grain and stone grain, are formed using various printing methods to plain surfaces without patterns. Similarly, the gloss level of the surface is also an important item as the design properties, and is selected according to the requirements or applications from the range from a high gloss surface like a mirror surface to a low gloss surface with no reflection.

Further, as described above, the imparting of the durability is mentioned as a function, which is of equal importance to the design properties, of the decorative sheet. The durability is a comprehensive evaluation of scratch resistance, contamination resistance, and whether the scratch resistance or the contamination resistance is continuously secured for a long period of time, and the requirements vary depending on the environment or the circumstances in which the decorative sheet is used, but the decorative sheet always having high performance is required.

To impart the durability, it is common to form a surface protective layer on the outermost surface in the decorative sheet. Further, it is common to add a gloss adjuster (matting additive) into the surface protective layer to adjust the gloss level described above, particularly, to achieve low gloss.

Further, the decorative sheet is commonly subjected to processing, such as cutting or bending, to form a decorative plate or a decorative material, and therefore preferably has processability which allows the decorative sheet to withstand the processing.

As the decorative sheet in which the design properties (low gloss), the scratch resistance, and the contamination resistance are taken into consideration as described above, a decorative sheet described in PTL 1 is mentioned, for example.

PTL 2 describes a laminated film inducing a radial bend structure having a dendrite shape of a certain size in a cured layer, which is the outermost layer, at a certain frequency.

PTL 3 relates to a decorative material with excellent anti-pollution properties and aesthetic effects and a manufacturing method thereof. The decorative material includes first to third areas having minute surface structures different from each other on a coating layer which is the outermost layer, thereby having the excellent anti-pollution properties.

PTL 4 provides a cured product which has, on its surface, a wrinkled structure with an arithmetic average roughness Ra of 0.01 μm or more.

Citation List

Patent Literature

PTL 1: JP 2019-119138 A
PTL 2: KR 2020 0031282 A
PTL 3: KR 2020 0059905 A
PTL 4: JP 2020 111715 A

Summary of Invention

Technical Problem

In recent years, due to the expansion of the applications of decorative plates using the decorative sheet and the increasing sophistication of quality consciousness of consumers, the decorative sheet is required to simultaneously achieve low gloss, and fingerprint resistance, scratch resistance, contamination resistance, and bending processability.

With respect to the above-described requirements, a method including adding a gloss adjuster at a high concentration and roughening the surface is mentioned for achieving low gloss. However, the addition of a large amount of the gloss adjuster causes the following problems. (1) Fingerprint stains are hard to remove, so that the fingerprint resistance decreases. (2) In a scratch resistance test, the gloss adjuster is separated, so that the scratch resistance decreases. (3) Dirt is hard to remove, so that the contamination resistance decreases. (4) Whitening occurs with the gloss adjuster as a trigger during bending, so that the bending processability decreases.

To solve the above-described problems, it is an object of the present invention to provide a decorative sheet having excellent design properties, i.e., low gloss, and having fingerprint resistance, high durability (particularly scratch resistance or contamination resistance), and processability.

Solution to Problem

The present inventors have found that a decorative sheet can be provided which develops low gloss, and fingerprint resistance, high durability (particularly scratch resistance or contamination resistance), and processability by optimizing an irregular shape of a surface protective layer to achieve low gloss and, further, repeating an experiment to find necessary structural elements for materials used for the surface protective layer.

To solve the problems, a decorative sheet according to one aspect of the present invention is as defined in claim 1. Preferred embodiments of the decorative sheet are the subject of claims 2 to 17.

Advantageous Effects of Invention

One aspect of the present invention can provide a decorative sheet simultaneously achieving low gloss, and fingerprint resistance, scratch resistance, contamination resistance, and bending processability.

Brief Description of Drawings

FIG. 1 is a schematic cross-sectional view for explaining the configuration of a decorative sheet according to an embodiment of the present invention;

FIG. 2 is a schematic cross-sectional view for explaining one configuration of a surface protective layer of the decorative sheet according to the embodiment of the present invention;

FIG. 3 is a plane photograph illustrating one configuration example of the surface of the surface protective layer of the decorative sheet according to the embodiment of the present invention;

FIG. 4 is a schematic cross-sectional view illustrating the cross-sectional shape of ridge-like parts according to the embodiment of the present invention; and

FIGS. 5A to 5J are schematic views for explaining changes with time of the irradiance of each irradiation light in a manufacturing process of the decorative sheet according to the embodiment of the present invention.

Description of Embodiments

Hereinafter, the configuration of a decorative sheet according to an embodiment of the present invention will be described with reference to the drawings.

Herein, the drawings are schematic, and the relationship between the thickness and the plane dimension, the ratio of the thickness of each layer, and the like are different from the actual relationship, ratio, and the like. The embodiment described below exemplifies the configuration for embodying the technical idea of the present invention. The technical idea of the present invention can be variously altered within the technical scope specified by claims.

(Configuration)

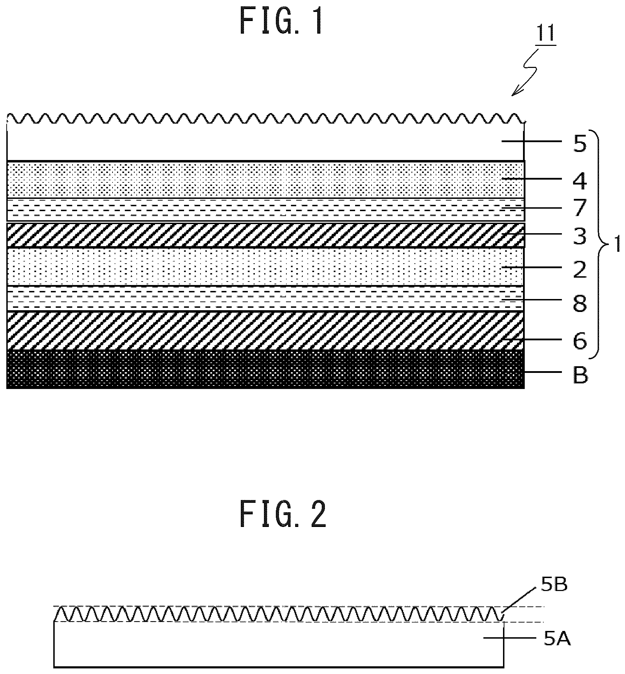

As illustrated in FIG. 1, a decorative sheet 1 of this embodiment contains a pattern layer 3, an adhesive layer 7 (heat-sensitive adhesive layer, anchor coat layer, dry lamination adhesive layer), a transparent resin layer 4, and a surface protective layer 5 deposited in this order on the front surface side, which is one surface of a base material layer (substrate layer) 2. Further, a concealing layer 8 and a primer layer 6 are provided on the back surface side, which is the other surface of the base material layer 2. The adhesive layer 7, the transparent resin layer 4, the concealing layer 8, and the primer layer 6 may be omitted.

As illustrated in FIG. 1, the decorative sheet 1 of this embodiment constitutes a decorative material 11 by being pasted to a board B. The board B is not particularly limited and contains, for example, woody boards, inorganic boards, metal plates, composite plates containing a plurality of materials, and the like.

<Base material layer 2>

As the base material layer 2, one optionally selected from paper, synthetic resin or synthetic resin foam, rubber, non-woven fabric, synthetic paper, metallic foil, and the like is usable, for example. As the paper, thin paper, titanium paper, resin-impregnated paper, and the like can be mentioned. As the synthetic resin, polyethylene, polypropylene, polybutylene, polystyrene, polycarbonate, polyester, polyamide, an ethylene-vinyl acetate copolymer, polyvinyl alcohol, acryl, and the like can be mentioned. As the rubber, ethylene-propylene copolymer rubber, ethylene-propylene-diene copolymer rubber, styrene-butadiene copolymer rubber, styreneisoprene-styrene block copolymer rubber, styrene-butadiene-styrene block copolymer rubber, polyurethane, and the like can be mentioned. As the non-woven fabric, organic or inorganic non-woven fabrics are usable. As metals of the metallic foil, aluminum, iron, gold, silver, and the like can be mentioned.

When an olefin-based resin is used as the base material layer 2, the surface of the base material layer 2 is in an inactive state in many cases. Therefore, the primer layer 6 is preferably provided between the base material layer 2 and the board B. In addition thereto, to improve the adhesiveness between the base material layer 2 containing an olefin-based material and the board B, the base material layer 2 may be subjected to surface modification treatment, such as corona treatment, plasma treatment, ozone treatment, electron beam treatment, ultraviolet treatment, and dichromic acid treatment, for example.

As the primer layer 6, the same materials as those of the pattern layer 3 described later are usable. The primer layer 6 is provided on the back surface of the decorative sheet 1, and therefore, considering that the decorative sheet 1 is wound up in a web shape, inorganic fillers may be added to the primer layer 6 to avoid blocking and enhance the adhesion with an adhesive. As the inorganic fillers, silica, alumina, magnesia, titanium oxide, barium sulfate, and the like can be mentioned.

The layer thickness of the base material layer 2 is preferably within the range of 20 μm or more and 250 μm or less considering printing workability or cost.

<Pattern layer 3>

The pattern layer 3 is a layer in which pattern printing is applied to the base material layer 2 using ink. As a binder of the ink, any of simple substances or modified products of nitrocellulose, cellulose, vinyl chloride-vinyl acetate copolymer, polyvinyl butyral, polyurethane, acryl, polyester, and the like can be selected and used as appropriate, for example. The binder may be an aqueous type, a solvent type, or an emulsion type, and may be a one-component type or a two-component type using a curing agent. Further, a method may be used which uses a curable ink and includes curing the ink by irradiation with ultraviolet rays, electron beams, or the like. In particular, the most common method is a method which uses a urethane-based ink and includes curing the ink with isocyanate. In addition to the binder, pigments, colorants, such as dyes, extenders, solvents, and various additives contained in common ink are added to the pattern layer 3, for example. Examples of highly versatile pigments include condensed azo, insoluble azo, quinacridone, isoindoline, anthraquinone, imidazolone, cobalt, phthalocyanine, carbon, titanium oxide, iron oxide, and pearl pigments, such as mica, for example.

Separately from the application of ink, it is also possible to apply design to the pattern layer 3 by vapor deposition or sputtering of various metals. In particular, it is preferable that a light stabilizer is added to the ink above, which suppresses the deterioration of the decorative sheet 1 itself caused by the photodegradation of the ink, and thus the life of the decorative sheet 1 can be extended.

<Adhesive layer 7>

The adhesive layer 7 is a layer also referred to as a heat-sensitive adhesive layer, an anchor coat layer, or a dry lamination adhesive layer.

Resin materials of the adhesive layer 7 are not particularly limited, and any of resin materials, such as acrylic, polyester-based, polyurethane-based, and epoxy-based resin materials can be selected and used as appropriate, for example. As resin materials of the adhesive layer 7, an ethylene-vinyl acetate copolymer resin-based adhesive is also usable, for example. A coating method can be selected as appropriate according to the viscosity or the like of the adhesive. In common, a gravure coating method is used. The adhesive is applied to the upper surface of the pattern layer 3 by the gravure coating method, and then the pattern layer 3 is laminated to the transparent resin layer 4. The adhesive layer 7 can be omitted when sufficient adhesive strength between the transparent resin layer 4 and the pattern layer 3 can be obtained.

<Transparent resin layer 4>

As a resin material of the transparent resin layer 4, an olefin-based resin is preferably used. Examples of the olefin-based resin include, for example, polypropylene, polyethylene, polybutene, and the like, and, in addition thereto, those obtained by homopolymerizing or copolymerizing two or more types of α-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, and the like), and those obtained by copolymerizing ethylene or α-olefin with other monomers, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, and an ethylene-butyl acrylate copolymer.

To improve the surface strength of the decorative sheet 1, highly crystalline polypropylene is preferably used as the resin of the transparent resin layer 4. To the transparent resin layer 4, various additives, such as a heat stabilizer, a light stabilizer, an anti-blocking agent, a catalyst scavenger, a colorant, a light scattering agent, and a gloss adjuster, can be added, for example, as necessary. As the heat stabilizer, phenol-based, sulfur-based, phosphorus-based, hydrazine-based heat stabilizers and the like are commonly added in any combination thereof. As the light stabilizer, hindered amine-based light stabilizers and the like are commonly added in any combination thereof.

<Surface protective layer 5>

The surface protective layer 5 has a core part 5A and ridge-like parts 5B provided to project in a ridge shape from one surface of the core part 5A. Thus, an irregular shape is formed on the surface of the surface protective layer 5.

Herein, in the decorative sheet 1 according to this embodiment, the "ridge-like" refers to a shape which is elongated and raised and in which the elongated and raised parts are linearly connected in a plan view. The ridge-like parts 5B may be curved or linear in a plan view, but is preferably curved from the viewpoint of fingerprint resistance on the surface of the decorative sheet 1. In the present disclosure, the ridge-like part 5B is, for example, a part from the lowest part to the tip of the irregular shape provided on the surface of the surface protective layer 5, and the core part 5A refers to a part excluding the ridge-like parts 5B of the surface protective layer 5.

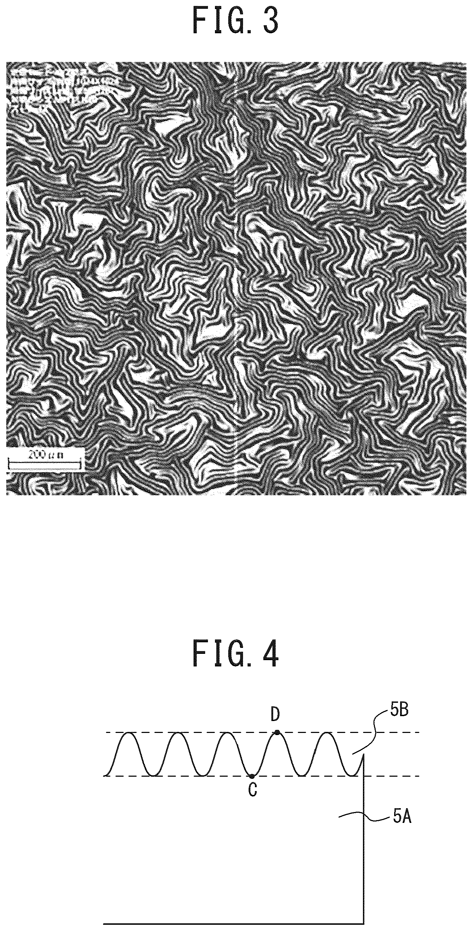

FIG. 2 is a cross-sectional view schematically illustrating a cross section (cross section in the thickness direction of the surface protective layer 5) of the ridge-like parts 5B of the surface protective layer 5. FIG. 3 is a plane photograph illustrating the configuration of the surface of the surface protective layer 5. Herein, FIG. 3 is a plane photograph obtained by a laser microscope (OLS-4000 manufactured by Olympus).

The ridge-like parts 5B have a shape which is elongated and raised and in which the elongated and raised parts are linearly connected in a plan view as illustrated in the plane photograph of FIG. 3. The ridge-like parts 5B are formed by irradiating the surface of an ionizing radiation curable resin with an ionizing radiation of a specific wavelength, and shrinking the surface of the ionizing radiation curable resin as described later.

The shape of such ridge-like parts 5B can be expressed by a ratio RSm/Ra of a surface roughness index RSm (μm) in the horizontal direction (which is the plane direction of the surface protective layer 5, and the left-right direction in FIG. 2) to a surface roughness index Ra (μm) in the vertical direction (which is the depth direction of the ridge-like parts 5B and the thickness direction of the surface protective layer 5, and the vertical direction in FIG. 2). The RSm/Ra is preferably 10 or more and 300 or less. The RSm/Ra is more preferably 10 or more and 250 or less. When the RSm/Ra is less than 10, the shape of the ridge-like parts 5B is excessively fine, making it hard to wipe off dirt and deteriorating contamination resistance. When the RSm/Ra is larger than 300, the interval between the ridge-like parts is excessively large, and therefore low gloss is not achieved.

The RSm/Ra is still more preferably 50 or more and 200 or less. When the RSm/Ra is within this numerical range, the interval between the ridge-like parts is moderately wide, and therefore the affinity with water or detergents (water containing surfactants or alcohol) is improved. Therefore, in the case of a decorative sheet having the RSm/Ra within the numerical range, even when the surface of the decorative sheet is dirty, the dirt can be wiped off with water or the detergent.

The RSm/Ra is most preferably 80 or more and 150 or less. When the RSm/Ra is within this numerical range, a commonly commercially available cleaning sponge easily enters between the ridge-like parts. Therefore, when the decorative sheet surface is dirty, the dirt can be wiped off using the commonly commercially available cleaning sponge.

Herein, the Ra and the RSm are measured values when measured using a line roughness meter (according to JIS B0601).

The cross-sectional shape in the thickness direction of the surface protective layer 5 of the ridge-like parts 5B may be a sine wave shape.

Herein, the "sine wave shape" refers to a shape in which a line from the lowest position C to the highest position (vertex) D of the ridge-like part 5B can be represented by a sine wave as illustrated in FIG. 4.

The shape between the adjacent ridge-like parts 5B (valley) may be a recessed curved shape. More specifically, the shape of the lowest position C of the ridge-like part 5B may be a recessed curved shape.

Hereinafter the mechanism by which the ridge-like parts 5B are formed is described.

When acrylate is irradiated with a light with a wavelength of 200 nm or less as a first irradiation light, the acrylate can be self-excited. Therefore, by irradiating the acrylate with a light of 200 nm or less, the acrylate can be crosslinked. The light of 200 nm or less reaches a depth of about several tens to several hundreds of nm in the acrylate. Therefore, only the surface is crosslinked, and a part under the surface has fluidity, and therefore fine irregular shapes continuous in a wavy shape like folded wrinkles are generated.

The light of 200 nm or less is absorbed by oxygen in the atmosphere. Therefore, the treatment of acrylate requires the introduction of nitrogen gas for the control of the reaction atmosphere. The residual oxygen concentration in the reaction atmosphere is preferably suppressed to 2000 ppm or less. The residual oxygen concentration in the reaction atmosphere is more preferably 1000 ppm or less.

To generate the irregular shapes by the light with a wavelength of 200 nm or less, which is the first irradiation light, the integrated light intensity of the first irradiation light is preferably set to 0.5 mJ/cm$^2$ or more and 200 mJ/cm$^2$ or less. The integrated light intensity is more preferably 1 mJ/cm$^2$ or more and 100 mJ/cm$^2$ or less. The integrated light intensity is still more preferably 3 mJ/cm$^2$ or more and 50 mJ/cm$^2$ or less. The integrated light intensity is most preferably 5 mJ/cm$^2$ or more and 30 mJ/cm$^2$ or less. When the integrated light intensity is less than 0.5 mJ/cm$^2$, the curing shrinkage reaction is weak and the irregular shapes are not sufficiently formed, and therefore the gloss does not decrease. When the integrated light intensity is more than 200 mJ/cm$^2$, the curing shrinkage reaction becomes excessively strong, so that the surface condition deteriorates.

The light with a wavelength of 200 nm or less, which is the first irradiation light, can be extracted by an excimer VUV light. The excimer VUV light can be produced from a noble gas or noble gas halide compound lamp. When electrons with high energy are given to the lamp filled with a noble gas or a noble gas halide compound from the outside, a large number of discharge plasmas (dielectric barrier discharges) are generated. This plasma discharge excites atoms of a discharge gas (noble gas), so that the discharge gas momentarily enters an excimer state. When returning from this excimer state to the ground state, the gas emits a light in the wavelength region peculiar to the excimer.

Gas used for the excimer lamp may be any conventionally used gas insofar as the gas emits the light of 200 nm or less. As the gas, noble gases, such as Xe, Ar, and Kr, or mixed gases of noble gases, such as ArBr and ArF, and a halogen gas are usable. The excimer lamp has a wavelength (center wavelength) varying depending on the gas, and has a wavelength of about 172 nm (Xe), about 126 nm (Ar), about 146 nm (Kr), about 165 nm (ArBr), about 193 nm (ArF), or the like, for example.

However, considering a difference between the magnitude or the wavelength of the photon energy to be obtained and the bond energy of organic substances, a xenon lamp emitting an excimer light having a center wavelength of 172 nm is preferably used as a light source. Further, considering a facility maintenance cost, the availability of materials, or the like, a xenon lamp is preferably used as a light source.

The light with a wavelength of 200 nm or less, which is the first irradiation light, reaches only a depth of several tens to several hundreds of nm from the outermost surface in acrylate, and therefore the inside of the surface protective layer 5 having the ridge-like parts 5B formed by the irradiation with the light of 200 nm or less has fluidity, and thus a curing reaction needs to be further advanced. To cure the surface protective layer 5 after the irradiation with the light of 200 nm or less, an ionizing radiation or a UV light with a wavelength longer than that of the light with a wavelength of 200 nm or less, which is the first irradiation light, is usable as a second irradiation light.

In this embodiment, for example, after the irradiation with the second irradiation light, an ionizing radiation of a type different from the second irradiation light or a UV light with a wavelength longer than that of the second irradiation light may be emitted as a third irradiation light. However, the surface protective layer 5 having the ridge-like parts 5B is preferably formed only by the irradiation with the two types of the lights of the first irradiation light and the second irradiation light. Herein, the third irradiation light may be emitted when the strength of the surface protective layer 5 is not sufficient only by the irradiation with the second irradiation light.

To cure the entire surface protective layer 5 by the irradiation with the second irradiation light, the integrated light intensity of the second irradiation light is preferably set to 10 mJ/cm$^2$ or more and 500 mJ/cm$^2$ or less. The integrated light intensity is more preferably 50 mJ/cm$^2$ or more and 400 mJ/cm$^2$ or less. The integrated light intensity is still more preferably 100 mJ/cm$^2$ or more and 300 mJ/cm$^2$ or less. When the integrated light intensity is less than 10 mJ/cm$^2$, the curing reaction is weak and sufficient strength cannot be imparted to the entire surface protective layer 5, and therefore scratch resistance tends to decrease. When the integrated light intensity is more than 200 mJ/cm$^2$, the curing reaction tends to be excessively strong, so that the surface condition tends to deteriorate.

The integrated light intensity of the second irradiation light is preferably larger than the integrated light intensity of the first irradiation light. The integrated light intensity of the second irradiation light is preferably 1.1 times or more and 50.0 times or less and more preferably 5.0 times or more and 30.0 times or less the integrated light intensity of the first irradiation light. When the integrated light intensity of the second irradiation light is less than 1.1 times the integrated light intensity of the first irradiation light, the curing reaction is weak, so that sufficient strength cannot be imparted to the entire surface protective layer 5 in some cases. When the integrated light intensity of the second irradiation light is more than 50.0 times the integrated light intensity of the first irradiation light, the curing reaction to the entire surface protective layer 5 becomes excessively strong, so that the ridge-like parts 5B are deformed in some cases.

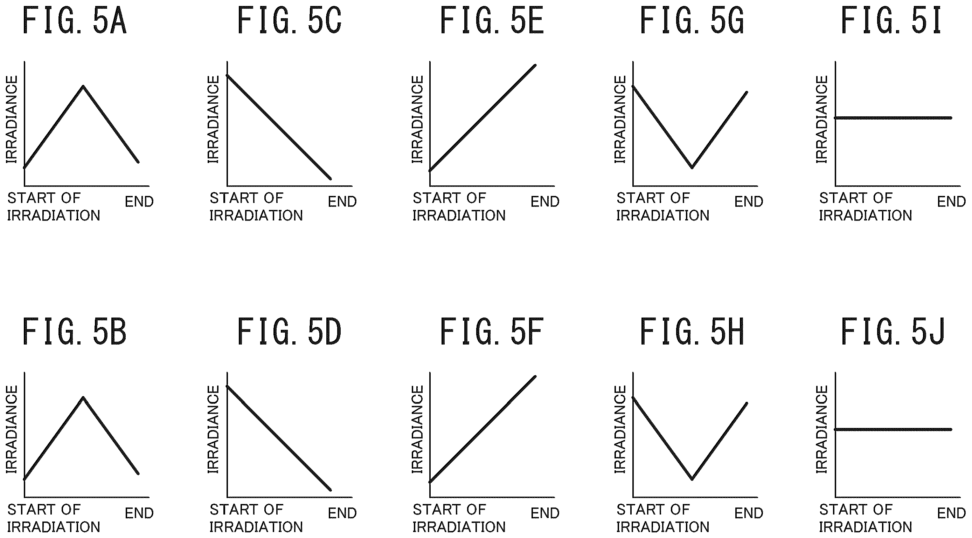

Hereinafter, changes with time of the irradiance of the first irradiation light and changes with time of the irradiance of the second irradiation light are described with reference to FIGS. 5A to 5J.

FIGS. 5A to 5J are views schematically illustrating the changes with time of the irradiance of the first irradiation light and the changes with time of the irradiance of the second irradiation light.

FIGS. 5A, 5C, 5E, 5G, and 5I are views schematically illustrating the changes with time of the irradiance of the first irradiation light. FIGS. 5B, 5D, 5F, 5H, and 5J are views schematically illustrating the changes with time of the irradiance of the second irradiation light.

The irradiance of the first irradiation light may gradually increase with the progress of an irradiation time, and then gradually decrease with the progress of the irradiation time as illustrated in FIG. 5A. The irradiance of the first irradiation light may gradually decrease with the progress of the irradiation time as illustrated in FIG. 5C. The irradiance of the first irradiation light may gradually increase with the progress of the irradiation time as illustrated in FIG. 5E. The irradiance of the first irradiation light may gradually decrease with the progress of the irradiation time, and then gradually increase with the progress of the irradiation time as illustrated in FIG. 5G. The irradiance of the first irradiation light may be constant from the start of the irradiation to the end of the irradiation as illustrated in FIG. 5I.

The irradiance of the second irradiation light may gradually increase with the progress of the irradiation time, and then gradually decrease with the progress of the irradiation time as illustrated in FIG. 5B. The irradiance of the second irradiation light may gradually decrease with the progress of the irradiation time as illustrated in FIG. 5D. The irradiance of the second irradiation light may gradually increase with the progress of the irradiation time as illustrated in FIG. 5F. The irradiance of the second irradiation light may gradually decrease with the progress of the irradiation time, and then gradually increase with the progress of the irradiation time as illustrated in FIG. 5H. The irradiance of the second irradiation light may be constant from the start of the irradiation to the end of the irradiation as illustrated in FIG. 5J.

In this embodiment, the irradiation forms of the first irradiation light illustrated in FIGS. 5A, 5C, 5E, 5G, and 5I and the irradiation forms of the second irradiation light illustrated in FIGS. 5B, 5D, 5F, 5H, and 5J can be used in combination as appropriate. For example, the irradiation form of the first irradiation light illustrated in FIG. 5A and the irradiation form of the second irradiation light illustrated in FIG. 5F may be used in combination. The irradiation form of the first irradiation light illustrated in FIG. 5G and the irradiation form of the second irradiation light illustrated in FIG. 5F may be used in combination. When the RSm/Ra value is set to 10 or more and 300 or less, which is a more preferable range, the irradiation form of the first irradiation light illustrated in FIG. 5C and the irradiation form of the second irradiation light illustrated in FIG. 5F may be used in combination.

As described above, the ridge-like parts 5B formed by the light irradiation with the light of 200 nm or less has a finer structure than the structure of an irregular shape formed by mechanical processing, such as embossing, on the surface of the surface protective layer 5. The formation of such a fine irregular shape on the surface of the surface protective layer 5 enables an improvement of the fingerprint resistance while maintaining a matte feeling on the surface of the decorative sheet 1.

The layer thickness of the surface protective layer 5 is preferably set in the range of 2 $\mu$m or more and 20 $\mu$m or less. The layer thickness of the surface protective layer 5 is more preferably in the range of 3 $\mu$m or more and 20 $\mu$m or less. The layer thickness of the surface protective layer 5 is still more preferably in the range of 5 $\mu$m or more and 15 $\mu$m or less. The layer thickness of the surface protective layer 5 is most preferably in the range of 5 $\mu$m or more and 12 $\mu$m or less. When the layer thickness of the surface protective layer 5 is set to less than 2 $\mu$m, the shaping by a vacuum ultraviolet light is not deeply performed, and thus low gloss cannot be achieved. When the layer thickness of the surface protective layer 5 is set to be larger than 20 $\mu$m, the processability decreases, and thus whitening occurs in bending.

The layer thickness of the surface protective layer 5 is preferably set such that a ratio of the layer thickness of the ridge-like parts 5B to the layer thickness of the core part 5A (Layer thickness of the ridge-like parts 5B/Layer thickness of the core part 5A) is 0.01 or more and 2.0 or less and more preferably set such that the ratio is 0.1 or more and 1.0 or less.

Herein, the pattern layer 3 and the surface protective layer 5 can be formed by various printing methods, such as a gravure printing method, an offset printing method, a screen printing method, an electrostatic printing method, and an inkjet printing method, for example. The surface protective layer 5 covers the entire surface on the front surface side of the base material layer 2, and therefore can also be formed by various coating methods, such as a roll coating method, a knife coating method, a microgravure coating method, and a die coating method, for example. The printing methods or the coating methods may be selected separately depending on the layer to be formed or the same method may be selected for collective processing.

The pattern layer 3 and the surface protective layer 5 may be synchronized from the viewpoint of design properties. The synchronization requires the collective formation of the surface protective layer 5 after the formation of the pattern layer 3, and therefore the gravure printing method is preferably used. Further, the gravure printing method can be performed at relatively high speed, and thus is advantageous also in terms of cost, which is preferable. Herein, the synchronization means that 50% or more, preferably 70% or more, and most preferably 90% or more of a part where the surface protective layer 5 is formed overlaps with the pattern part of the pattern layer 3 in a plan view.

To adjust the layer thickness of the surface protective layer 5, the coating amount may be adjusted in the printing methods and the coating methods described above. One in which a surface protective layer is formed on a substrate (base material layer) and one in which no surface protective layer is formed thereon are produced, and then the coating amount can be calculated from a mass difference therebetween in various printing methods and coating methods.

The surface protective layer 5 contains the ionizing radiation curable resin as a main material. Herein, the main material refers to the fact that the material is contained in a proportion of 60 parts by mass or more, more preferably 70 parts by mass or more, and most preferably 80 parts by mass or more based on 100 parts by mass of the surface protective layer. As the ionizing radiation curable resin constituting the surface protective layer 5, known substances, such as various monomers or commercially available oligomers, are usable. For example, (meth)acrylic resin, silicone-based resin, polyester-based resin, urethane-based resin, amide-based resin, and epoxy-based resin are usable. The ionizing radiation curable resin may be either a water-based resin or a non-water-based (organic solvent-based) resin.

A main component of the ionizing radiation curable resin constituting the surface protective layer 5 is a trifunctional acrylate resin containing a repeating structure. As the trifunctional acrylate resin, trimethylolpropane triacrylate, glycerol triacrylate, isocyanurate triacrylate, pentaerythritol triacrylate, and the like are usable, for example.

Herein, the main component refers to a component contained in a proportion 60 parts by mass or more, more preferably 70 parts by mass or more, and most preferably 80 parts by mass or more based on 100 parts by mass of the resin component constituting the ionizing radiation curable resin. A difunctional acrylate resin is not preferable because the crosslinking degree is insufficient, so that the scratch resistance decreases. A tetra- or more- functional acrylate resin is not preferable because the crosslinking degree becomes excessively high, and therefore the processability decreases.

When the gravure printing method is used as the coating method, a suitable viscosity range of the ionizing radiation curable resin is 10 to 500 mPa·s and an optimum viscosity range thereof is 50 to 300 mPa·s. Therefore, trimethylolpropane triacrylate or glycerol triacrylate is preferably used as the trifunctional acrylate resin because the viscosity can be kept in the suitable viscosity range or the optimum viscosity range. A resin having a skeleton causing a hydrogen bond or $\pi$-$\pi$ stacking is not preferable because the viscosity is as high as 500 mPa·s or more. To adjust the viscosity, an organic solvent or a difunctional acrylate resin having a low viscosity can be added. However, the use of the organic solvent is not preferable from the viewpoint of environmental loads. The difunctional acrylate resin is not preferable because the scratch resistance decreases when the addition amount is large. Therefore, when the difunctional acrylate resin is added to the trifunctional acrylate resin for use, the content of the difunctional acrylate resin is preferably within the range of 10% by mass or more and 30% by mass or less and more preferably within the range of 15% by mass or more and 20% by mass or less of the content (mass) of the trifunctional acrylate resin.

The repeating structure is any one of an ethylene oxide (EO) structure, a propylene oxide (PO) structure, and an $\varepsilon$-caprolactone (CL) structure. The repeating structure is more preferably ethylene oxide or propylene oxide. The ethylene oxide structure, the propylene oxide structure, and the $\varepsilon$-caprolactone structure are preferable because the molecules are freely rotatable and highly flexible, so that the molecules are easily folded by the light of 200 nm or less and fine irregular shapes are easily formed. The number of repetitions of the repeating structure may be set to 3 or more. The number of repetitions thereof is preferably 3 or more and 30 or less and more preferably 3 or more and 20 or less. When the number of repetitions is 2 or less, the ionizing radiation curable resin constituting the surface protective layer 5 does not sufficiently shrink when irradiated with a vacuum ultraviolet light (VUV light), so that the surface protective layer 5 does not have low gloss. When the number of repetitions is larger than 30, the crosslinking density decreases, so that the scratch resistance of the surface protective layer 5 deteriorates.

The number of repetitions of the repeating structure above can be analyzed by using MALDI-TOF-MS. The ionizing radiation curable resin sometimes have a molecular weight distribution. When there is a molecular weight distribution, the number of repetitions is the number of repetitions equivalent to the molecular weight having the strongest peak in the mass spectrum of the MALDI-TOF-MS.

The surface protective layer 5 may contain particles. The addition of particles having an optimum particle size and an optimum content enables the formation of a uniform surface. As the particles, organic materials, such as PE wax, PP wax, resin beads, or inorganic materials, such as silica, glass, alumina, titania, zirconia, calcium carbonate, and barium sulfate, are usable, for example.

The average particle size of the particles is preferably 10 μm or less. The average particle size is more preferably 1 μm or more and 8 μm or less, still more preferably 2 μm or more and 6 μm or less, and most preferably 3 μm or more and 5 μm or less. The average particle size larger than 10 μm is not preferable because the scratch resistance decreases due to particle pull-out. The average particle size less than 1 μm is not preferable because an effect of uniformizing the surface is low.

The addition amount of the particles is preferably 0.5 part by mass or more and 10 parts by mass or less based on 100 parts by mass of the ionizing radiation curable resin. The addition amount of the particles is more preferably 2 parts by mass or more and 8 parts by mass or less, still more preferably 2 parts by mass or more and 6 parts by mass or less, and most preferably 4 parts by mass or more and 5 parts by mass or less. The surface protective layer 5 can form a uniform surface condition due to the particles contained in the addition amount described above, which is preferable.

Herein, the "particle size (average particle size)" may be a value (average value) obtained by measuring the particle size distribution of the particles to be used or a value obtained by actually measuring and averaging the particle sizes of a plurality of particles from the observation of a cross section of the obtained decorative material. Although measurement methods for the two values are different from each other, the particle size values to be obtained are substantially the same. For example, the average particle size of the particles to be added to the surface protective layer 5 may be the median size (D50) measured by a laser diffraction/scattering type particle size distribution measuring device.

When the entire surface protective layer 5 is cured by a UV light, a photoinitiator needs to be added to the surface protective layer 5. The photoinitiator is not particularly limited, and examples thereof include a benzophenone-type, an acetophenone-type, a benzoin ether-type, and a thioxanthone-type, for example.

To impart the required functions, functional additives, such as antibacterial agents and antifungal agents, can be optionally added to the surface protective layer 5. Further, an ultraviolet absorber and a light stabilizer can be added to the surface protective layer 5 as necessary. As the ultraviolet absorber, a benzotriazole type, a benzoate type, a benzophenone type, a triazine type, and the like are commonly added in any combination, for example. As the light stabilizer, a hindered amine type and the like are commonly added in any combination, for example.

Such a decorative sheet 1 has gloss level of 5.0 or less although the decorative sheet 1 does not contain the gloss adjuster (matting additive), and thus provides a decorative sheet having extremely low gloss level. In a conventional decorative sheet, when the gloss level of a decorative sheet having a surface protective layer is 8 or less, the content ratio of the gloss adjuster in the surface protective layer is high, so that the surface protective layer becomes cloudy. Therefore, there has been a risk that the hues and the patterns of the colored pattern layer have not been clearly developed or the design properties of the decorative sheet have deteriorated. Further, when a decorative sheet having gloss level close to 0 is to be obtained, the content ratio of the gloss adjuster in the surface protective layer is much higher, and therefore it has been difficult to form a surface protective layer having a smooth surface without causing streaks, unevenness, and the like in the formation of the surface protective layer.

The decorative sheet 1 can provide a decorative sheet with low gloss level in which the gloss level is 5.0 or less while maintaining the same level of performance as that of a decorative sheet with gloss level of 20 or more. Herein, the "gloss level" is a measured value when measured at an incident angle of 60° using a gloss level meter according to JIS Z8741.

<Concealing layer 8>

When it is desired to impart a concealment property to the base board B to the decorative sheet 1, the concealment property can be imparted using a colored sheet for the base material layer 2 or by separately providing an opaque concealing layer 8. The concealing layer 8 can be basically formed of the same material as that of the pattern layer 3. However, it is intended to impart the concealment property, opaque pigments, titanium oxide, iron oxide, and the like are preferably used as pigments, for example. Further, to enhance the concealment property, metals, such as gold, silver, copper, and aluminum, can be added, for example. In common, flake-shaped aluminum is added in many cases.

(Manufacturing method)

A manufacturing example of the decorative sheet 1 is described.

A resin film is used as the base material layer 2, and the surface protective layer 5 is formed by printing on the upper surface of the base material layer 2. With respect to the surface protective layer 5, the light with a wavelength of 200 nm or less (first irradiation light) is emitted to the surface of the applied ionizing radiation curable resin to shrink the surface of the ionizing radiation curable resin. Subsequently, to cure the shrunk ionizing radiation curable resin, an ionizing radiation or a UV light with a wavelength longer than that of the light with a wavelength of 200 nm or less, which is first the irradiation light, is emitted. Thus, the decorative sheet 1 is formed which includes the surface protective layer 5 having the core part 5A and the ridge-like parts 5B provided to project in a ridge-like shape from one surface (upper surface) of the core part 5A.

This embodiment is not limited to the above-described embodiment. For example, to cure the shrunk ionizing radiation curable resin, an ionizing radiation or a UV light with a wavelength longer than that of the light with a wavelength of 200 nm or less, which is the first irradiation light, may be emitted only once. At that time, the integrated light intensity of the light with a wavelength of 200 nm or less, which is the first irradiation light, may be set to 0.5 mJ/cm$^2$ or more and 200 mJ/cm$^2$ or less.

(Operations and others)

The decorative sheet 1 according to this embodiment includes the surface protective layer 5 on which the irregular shape is formed on the surface. According to this configuration, the gloss (gloss level) of the surface protective layer can be adjusted even when the surface protective layer does not contain the gloss adjuster (matting additive). The gloss adjuster reduces the oil repellency of a layer formed of a resin material, and therefore fingerprints are easily attached. The surface protective layer 5 according to this embodiment does not contain the gloss adjuster, and therefore does not absorb oil, so that the oil repellency is relatively improved. Therefore, fingerprints are hardly attached to the decorative sheet 1 having the surface protective layer 5 in various situations, such as on-site construction, furniture assembly, and daily life of residents.

According to the configuration of the surface protective layer 5 having the irregular shape formed on the surface, the oil repellency of the surface protective layer 5 is improved, so that oil stains or the adsorption of contaminants to the surface of the decorative sheet 1 can be suppressed.

According to the surface protective layer 5 not containing the gloss adjuster, when the surface of the decorative sheet 1 is scratched, particles of the gloss adjuster do not fall off, which can make it hard to cause gloss changes or scratches on the surface of the decorative sheet 1.

In this embodiment, the surface protective layer 5 is formed in a single layer, but the present invention is not limited to such a configuration. For example, a configuration may be acceptable in which the surface protective layer 5 is formed in a multilayer. More specifically, the surface protective layer 5 may have the irregular shape formed on the surface by depositing two or more layers of the same ionizing radiation curable resin or depositing two or more layers of different ionizing radiation curable resins. When the two or more layers of different ionizing radiation curable resins are deposited, the outermost layer of the surface protective layer 5 contains the ionizing radiation curable resin as a main material, the ionizing radiation curable resin contains, as a main component, a trifunctional acrylic resin containing a repeating structure, the repeating structure is any one of the structures of ethylene oxide, propylene oxide, and ε-caprolactone, the number of repetitions of the repeating structure may be 3 or more, and a layer located on the base material layer 2 side of the surface protective layer 5 (i.e., layer located below the outermost layer of the surface protective layer 5) is not particularly limited, for example.

[Examples]

Hereinafter, Examples based on the present invention are described.

<Reference Example 1>

A 55 μm thick olefin film (manufactured by RIKEN TECHNOS CORP.) was used as a base material layer, one surface of the base material layer was subjected to corona treatment, and the one surface was coated with a coating liquid for surface protective layer described below. The layer thickness of the coating liquid for surface protective layer was set to 5 μm. Thereafter, an Xe excimer lamp with a wavelength of 172 nm was emitted to the surface of the coating liquid for surface protective layer such that the integrated light intensity was 100 mJ/cm$^2$ to shrink the surface. Subsequently, an ionizing radiation was emitted at 100 kGy to cure the coating liquid for surface protective layer, thereby forming the surface protective layer 5, and thus a decorative sheet of Reference Example 1 having a total thickness of 60 μm was obtained.

(Coating liquid for surface protective layer)

The coating liquid for surface protective layer was formed by compounding particles described below with an ionizing radiation curable resin described below.

· Ionizing radiation curable resin

Type: Trimethylolpropane EO-modified triacrylate (6 moles of EO added)
Trade name: Miramer M3160 (manufactured by Miwon)
Formulation: 100 parts by mass

· Particles

Trade name: Silysia 250N (manufactured by Fuji Silysia Chemical Ltd.)
Particle size: 5 μm
Formulation: 0.5 part by mass

<Reference Example 2>

A decorative sheet of Reference Example 2 was obtained in the same manner as in Reference Example 1, except for replacing the ionizing radiation curable resin of Reference Example 1 with an ionizing radiation curable resin described below.

· Ionizing radiation curable resin

Type: Trimethylolpropane EO-modified triacrylate (15 moles of EO added)
Trade name: SR9035 (manufactured by Sartomer)

<Reference Example 3>

A decorative sheet of Reference Example 3 was obtained in the same manner as in Reference Example 1, except for replacing the ionizing radiation curable resin of Reference Example 1 with an ionizing radiation curable resin described below.

· Ionizing radiation curable resin

Type: Trimethylolpropane EO-modified triacrylate (3 moles of EO added)
Trade name: Miramer M3130 (manufactured by Miwon)

<Reference Example 4>

A decorative sheet of Reference Example 4 was obtained in the same manner as in Reference Example 1, except for replacing the ionizing radiation curable resin of Reference Example 1 with an ionizing radiation curable resin described below.

· Ionizing radiation curable resin

Type: Trimethylolpropane PO-modified triacrylate (6 moles of PO added)
Trade name: NK Ester A-TMPT-6PO (manufactured by Shin-Nakamura Chemical Co., Ltd.)

<Reference Example 5>

A decorative sheet of Reference Example 5 was obtained in the same manner as in Reference Example 1, except for replacing the ionizing radiation curable resin of Reference Example 1 with an ionizing radiation curable resin described below.

· Ionizing radiation curable resin

Type: Caprolactone-modified tris-(2-acryloxyethyl)isocyanurate (3 moles of caprolactone (CL) added)
Trade name: NK Ester A-9300-3CL (manufactured by Shin-Nakamura Chemical Co., Ltd.)

<Reference Example 6>

A decorative sheet of Reference Example 6 having a total thickness of 56 μm was obtained in the same manner as in Reference Example 1, except for setting the layer thickness of the coating liquid for surface protective layer of Reference Example 1 to 1 μm.

<Reference Example 7>

A decorative sheet of Reference Example 7 having a total thickness of 57 μm was obtained in the same manner as in Reference Example 1, except for setting the layer thickness of the coating liquid for surface protective layer of Reference Example 1 to 2 μm.

<Reference Example 8>

A decorative sheet of Reference Example 8 having a total thickness of 75 $\mu$m was obtained in the same manner as in Reference Example 1, except for setting the layer thickness of the coating liquid for surface protective layer of Reference Example 1 to 20 $\mu$m.

<Reference Example 9>

A decorative sheet of Reference Example 9 having a total thickness of 80 $\mu$m was obtained in the same manner as in Reference Example 1, except for setting the layer thickness of the coating liquid for surface protective layer of Reference Example 1 to 25 $\mu$m.

<Reference Example 10>

A decorative sheet of Reference Example 10 was obtained in the same manner as in Reference Example 9, except that the particles of Reference Example 9 were not compounded.

<Reference Example 11>

A decorative sheet of Reference Example 11 was obtained in the same manner as in Reference Example 3, except that the particles of Reference Example 3 were not compounded.

<Reference Example 12>

A decorative sheet of Reference Example 12 was obtained in the same manner as in Reference Example 1, except for replacing the particles of Reference Example 1 with particles described below.

· Particles

Trade name: Silysia 450 (manufactured by Fuji Silysia Chemical Ltd.)
Particle size: 8.0 $\mu$m
Formulation: 0.5 part by mass

<Reference Example 13>

A decorative sheet of Reference Example 13 was obtained in the same manner as in Reference Example 1, except for replacing the particles of Reference Example 1 with particles described below.

· Particles

Trade name: Silysia 780 (manufactured by Fuji Silysia Chemical Ltd.)
Particle size: 11.3 $\mu$m
Formulation: 0.5 part by mass

<Reference Example 14>

A decorative sheet of Reference Example 14 was obtained in the same manner as in Reference Example 1, except for setting the compounding amount of the particles of Reference Example 1 to 10 parts by mass.

<Reference Example 15>

A decorative sheet of Reference Example 15 was obtained in the same manner as in Reference Example 1, except for setting the compounding amount of the particles of Reference Example 1 to 11 parts by mass.

<Reference Example 16>

A decorative sheet of Reference Example 16 having a total thickness of 56 $\mu$m was obtained in the same manner as in Reference Example 1, except that the layer thickness of the coating liquid for surface protective layer of Reference Example 1 was set to 1 µm and the particles of Reference Example 1 were not compounded.

<Comparative Example 1>

A decorative sheet of Comparative Example 1 was obtained in the same manner as in Reference Example 1, except that the excimer lamp irradiation of Reference Example 1 was not performed and the compounding amount of the particles was set to 15 parts by mass.

<Comparative Example 2>

A decorative sheet of Comparative Example 2 was obtained in the same manner as in Reference Example 1, except for replacing the ionizing radiation curable resin of Reference Example 1 with an ionizing radiation curable resin described below.

· Ionizing radiation curable resin

Type: Ethylene glycol diacrylate (9 moles of EO added)
Trade name: Light acrylate 9EG-A (manufactured by Kyoeisha Chemical Co., Ltd.)

<Comparative Example 3>

A decorative sheet of Comparative Example 3 was obtained in the same manner as in Reference Example 1, except for replacing the ionizing radiation curable resin of Reference Example 1 with an ionizing radiation curable resin described below.

· Ionizing radiation curable resin

Type: Pentaerythritol tetraacrylate (35 moles of EO added)
Trade name: NK Ester ATM-35E (manufactured by Shin-Nakamura Chemical Co., Ltd.)

<Comparative Example 4>

A decorative sheet of Comparative Example 4 was obtained in the same manner as in Reference Example 1, except for replacing the ionizing radiation curable resin of Reference Example 1 with an ionizing radiation curable resin described below.

· Ionizing radiation curable resin

Type: Trimethylolpropane triacrylate
Trade name: NK Ester A-TMPT (manufactured by Shin-Nakamura Chemical Co., Ltd.)

(Evaluation)

The decorative sheets of Reference Examples 1 to 16 and Comparative Examples 1 to 4 obtained by the above-described methods were evaluated.
Those evaluated as "∘" and "∆" in Examples were accepted because no problems occur in practical use.

<Surface condition>

For the surface condition, the surface uniformity was visually evaluated.
The evaluation criteria were as follows.

o:     Uniform surface condition
∆:     Partially non-uniform surface condition
✕:     Totally non-uniform surface condition

<Gloss level>

For the gloss level, the 60° gloss level was measured using a Rhopoint IQ (manufactured by Konica Minolta).
A case where the gloss level is 15 or less is recognized as sufficiently low gloss, and therefore those having gloss level of "15 or less" were accepted in Examples.

<Fingerprint resistance: Wiping property evaluation>

As a fingerprint resistance evaluation, a fingerprint wiping property evaluation was carried out.
The 60° gloss level of the surface of each decorative sheet was measured and defined as "Initial gloss level". Subsequently, a fingerprint resistance evaluation liquid was attached onto the surface protective layer, and then the fingerprint resistance evaluation liquid attached to the surface of the decorative sheet was wiped off. Thereafter, the 60° gloss level of a part where the fingerprint resistance evaluation liquid was wiped off was measured and defined as "[Gloss level after wiping]". Herein, higher fatty acid was used as the fingerprint resistance evaluation liquid.
The fingerprint wiping rate was calculated as follows.

Fingerprint wiping rate (%) = (Gloss level after wiping/Initial gloss level) $\times$ 100

The evaluation criteria were as follows.

∘: 70% or more and less than 250%
Δ: 50% or more and less than 70% or 250% or more and less than 300%
×: Less than 50% or 300% or more

<Contamination resistance>

As a contamination resistance evaluation, 10 mm wide lines were drawn with a blue ink, a fast-drying black ink, and a red crayon according to Contamination A test specified in the Japanese Agricultural Standards (JAS), the lines were allowed to stand for 4 hours, the lines drawn with the blue ink, the fast-drying black ink, and the red crayon were wiped off with a cloth soaked with ethanol, and then the contamination resistance by ink was evaluated.
The evaluation criteria were as follows.

∘: The lines of the colors were able to be easily wiped off.
Δ: The lines of the colors were able to be partially wiped off but dirt partially remained.
×: The lines of the colors were not able to be wiped off.

<Scratch resistance test: Steel wool rubbing test>

The obtained decorative sheet was pasted to a woody board B using a urethane-based adhesive, and then a steel wool rubbing test was carried out as a scratch resistance evaluation. The decorative sheet surface was rubbed 20 times with steel wool under a 100 g load, and scratches or gloss changes occurring on the decorative sheet surface were visually confirmed.
The evaluation criteria were as follows.

∘: No scratches or gloss changes occurred on the surface.
Δ: Sligh scratches or gloss changes occurred on the surface.
×: Significant scratches or gloss changes occurred on the surface.

<Bending processability test>

The obtained decorative sheet was pasted to the woody board B using a urethane-based adhesive such that the surface on the base material layer side (i.e., back surface of the decorative sheet) faces the woody board B side, and then a V-shaped groove was formed up to the boundary where the woody board B and the decorative sheet 1 were pasted to each other such that the decorative sheet was not damaged.
Next, the woody board B was bent to 90° along the V-shaped groove such that the surface on the surface protective layer side of the decorative sheet (i.e., decorative sheet surface) was mountain-folded. Then, it was observed whether whitening or cracks occurred in a bent part of the decorative sheet surface using an optical microscope, and the state of bending processability was evaluated.

The evaluation criteria were as follows.

∘: No whitening or cracks were observed.
Δ: Whitening was partially observed.
✕: Whitening was observed on the entire surface or cracks were partially observed.

The evaluation results are shown in Table 1 and Table 2.

[Table 1]

| | | | Ref, Ex. 1 | Ref. Ex. 2 | Ref. Ex. 3 | Ref. Ex. 4 | Ref. Ex. 5 | Ref. Ex. 6 | Ref. Ex. 7 | Ref. Ex. 8 | Ref. Ex. 9 | Ref. Ex. 10 | Ref. Ex. 11 | Ref. Ex. 12 | Ref. Ex. 13 | Ref. Ex. 14 | Ref. Ex. 15 | Ref. Ex. 16 |
|---|---|---|---|---|---|---|---|---|---|---|---|---|---|---|---|---|---|---|
| Surface shape | | | Ridge-like shape | Ridge-like shape | Ridge-like shape | Ridge-like shape | Ridge-like shape | Ridge-like shape | Ridge-like shape | Ridge-like shape | Ridge-like shape | Ridge-like shape | Ridge-like shape | Ridge-like shape | Ridge-like shape | Ridge-like shape | Ridge-like shape | Ridge-like shape |
| RSm/Ra | | | 120 | 100 | 200 | 120 | 120 | 300 | 200 | 80 | 50 | 50 | 250 | 120 | 120 | 140 | 120 | 300 |
| Thickness ($\mu$m) | | | 5 | 5 | 5 | 5 | 5 | 1 | 2 | 20 | 25 | 25 | 5 | 5 | 5 | 5 | 5 | 1 |
| Acrylic resin | Number of functional groups | | 3 | 3 | 3 | 3 | 3 | 3 | 3 | 3 | 3 | 3 | 3 | 3 | 3 | 3 | 3 | 3 |
| | Repeating structure | Structure | C2H50 | C2H50 | C2H50 | C3H60 | C6H1002 | C2H50 | C2H50 | C2H50 | C2H50 | C2H50 | C2H50 | C2H50 | C2H50 | C2H50 | C2H50 | C2H50 |
| | | Number of repetitions | 6 | 15 | 3 | 6 | 3 | 6 | 6 | 6 | 6 | 6 | 3 | 6 | 6 | 6 | 6 | 6 |
| Additive | Particle size ($\mu$m) | | 5 | 5 | 5 | 5 | 5 | 5 | 5 | 5 | 5 | None | None | 8 | 11 | 5 | 5 | None |
| | Adding amount (part) | | 0.5 | 0.5 | 0.5 | 0.5 | 0.5 | 0.5 | 0.5 | 0.5 | 0.5 | - | - | 0.5 | 0.5 | 10 | 11 | - |
| Surface condition | | | ○ | ○ | ○ | ○ | ○ | △ | ○ | ○ | ○ | ○ | △ | ○ | ○ | ○ | ○ | △ |
| 60° gloss level value | | | 3 | 2 | 5 | 3 | 10 | 8 | 5 | 2 | 1.5 | 3 | 7 | 3 | 3 | 3 | 3 | 10 |
| Fingerprint resistance | | | ○ | ○ | ○ | ○ | ○ | ○ | ○ | ○ | ○ | ○ | ○ | ○ | △ | ○ | △ | ○ |
| Contamination resistance | Contamination A | | ○ | ○ | ○ | ○ | ○ | ○ | ○ | ○ | ○ | ○ | ○ | ○ | △ | ○ | △ | ○ |
| Scratch resistance | Steel | | ○ | ○ | ○ | ○ | ○ | △ | ○ | ○ | ○ | ○ | ○ | ○ | △ | ○ | △ | △ |
| Processability | V-cut | | ○ | ○ | ○ | ○ | ○ | ○ | ○ | ○ | △ | △ | ○ | ○ | △ | ○ | △ | ○ |

EP 4 563 369 B1

16

[Table 2]

|  |  |  | Comp. Ex. 1 | Comp. Ex. 2 | Comp. Ex. 3 | Comp. Ex. 4 |
|---|---|---|---|---|---|---|
| Surface shape | | | Irregularities due to particles | Ridge-like shape | Ridge-like shape | Ridge-like shape |
| RSm/Ra | | | 400 | 100 | 300 | 4000 |
| Thickness (μm) | | | 5 | 5 | 5 | 5 |
| Acrylic resin | Number of functional groups | | 3 | 2 | 4 | 3 |
|  | Repeating structure | Structure | C2H50 | C2H50 | C2H50 | None |
|  |  | Number of repetitions | 6 | 9 | 35 | 0 |
| Additive | Particle size (μm) | | 5 | 5 | 5 | 5 |
|  | Addina amount (part) | | 15 | 0.5 | 0.5 | 0.5 |
| Surface condition | | | ○ | ○ | ○ | ○ |
| 60° gloss level value | | | 10 | 3 | 5 | 90 |
| Finaerprint resistance | | | × | ○ | ○ | × |
| Contamination resistance | Contamination A | | × | ○ | ○ | ○ |
| Scratch resistance | Steel | | × | × | ○ | ○ |
| Processability | V-cut | | ○ | ○ | × | ○ |

As shown in Table 1, the decorative sheets of Reference Examples 1 to 16 can provide decorative sheets simultaneously achieving fingerprint resistance, scratch resistance, contamination resistance, and bending processability while having low gloss. By optimizing the layer thickness of the surface protective layer or the particle size and the addition amount of the particles to be compounded, in addition to the surface shape of the surface protective layer or the resin composition of the surface protective layer, a further performance improvement can be achieved.

Reference Signs List

1       decorative sheet
2       base material layer
3       pattern layer
4       transparent resin layer
5       surface protective layer
6       primer layer
7       adhesive layer
8       concealing layer
11      decorative material
B       board

**Claims**

1. A decorative sheet (1) comprising:

   a base material layer (2);
   a surface protective layer (5) provided on one surface of the base material layer (2); and
   a pattern layer (3) provided between the base material layer (2) and the surface protective layer (5), wherein the surface protective layer (5) has ridge-like parts (5B) provided to project in a ridge-like shape and form an irregular shape on a surface, **characterized in that**
   RSm/Ra of the irregular shape of the surface protective layer is within a range of 10 or more and 300 or less,

the surface protective layer (5) contains an ionizing radiation curable resin as a main material,
the ionizing radiation curable resin contains, as a main component, a trifunctional acrylic resin containing a repeating structure, and
the repeating structure is any one of the structures of ethylene oxide, propylene oxide, and ε-caprolactone.

2. The decorative sheet (1) according to claim 1,
a number of repetitions of the repeating structure is 3 or more.

3. The decorative sheet (1) according to claim 1 or 2, wherein the pattern layer (3) contains at least a binder.

4. The decorative sheet (1) according to any of claims 1 to 3,
wherein a board (B) is provided in a side of the base material layer (2) on which the pattern layer (3) is not formed.

5. The decorative sheet (1) according to claim 4, wherein a primer layer (6) is provided between the board (B) and the pattern layer (3).

6. The decorative sheet (1) according to any of claims 1 to 5,
wherein the decorative sheet (1) comprises a concealing layer (8).

7. The decorative sheet (1) according to claim 6,
wherein the concealing layer (8) is provided between the board (B) and the surface protective layer (5).

8. The decorative sheet (1) according to claim 6, wherein the concealing layer (8) is provided between the base material layer (2) and the primer layer (6).

9. The decorative sheet (1) according to any of claims 1 to 8,
wherein a transparent layer (4) is provided in a side of the surface protective layer (5) on which the irregular shape is not formed.

10. The decorative sheet (1) according to any of claims 1 to 8,
wherein an adhesive layer (7) is provided between the pattern layer (3) and the transparent resin layer (4).

11. The decorative sheet (1) according to any of claims 1 to 10,
wherein a thickness of the surface protective layer (5) is within a range of 2 μm or more and 20 μm or less.

12. The decorative sheet (1) according to any of claims 1 to 11,
wherein the surface protective layer (5) contains particles having an average particle size of 10 μm or less.

13. The decorative sheet (1) according to any of claims 1 to 12,
wherein gloss level of the surface protective layer (5) is 5.0 or less.

14. The decorative sheet (1) according to claim 4, wherein the pattern layer (3) and the surface protective layer (5) are synchronized from view point of design properties.

15. The decorative sheet (1) according to any of claims 1 to 14,
wherein the trifunctional acrylic resin is a resin containing glycerol triacrylate, isocyanurate triacrylate, pentaerythritol triacrylate, or trimethylolpropane triacrylate.

16. The decorative sheet (1) according to any of claims 1 to 14,
wherein the pattern layer (3) contains pigments or colorants including dyes.

17. The decorative sheet (1) according to any of claims 9 to 16,
wherein the transparent layer (4) includes an olefin-based resin.

**Patentansprüche**

1. Dekorfolie (1), die folgendes umfasst:

eine Basismaterialschicht (2);

eine Oberflächenschutzschicht (5), die auf einer Oberfläche der Basismaterialschicht (2) vorgesehen ist; und

eine Musterschicht (3), die zwischen der Basismaterialschicht (2) und der Oberflächenschutzschicht (5) vorgesehen ist, wobei

die Oberflächenschutzschicht (5) gratartige Teile (5B) aufweist, die so vorgesehen sind, dass sie in einer gratartigen Form vorstehen und eine unregelmäßige Form auf einer Oberfläche bilden, **dadurch gekennzeichnet, dass**

RSm/Ra der unregelmäßigen Form der Oberflächenschutzschicht (5) innerhalb eines Bereichs von 10 oder mehr und 300 oder weniger liegt,

die Oberflächenschutzschicht (5) ein durch ionisierende Strahlung härtbares Harz als Hauptmaterial enthält, das durch ionisierende Strahlung härtbare Harz als Hauptkomponente ein trifunktionelles Acrylharz enthält, das eine Wiederholungsstruktur enthält, und

die Wiederholungsstruktur mindestens eine der Strukturen von Ethylenoxid, Propylenoxid und $\varepsilon$-Caprolacton ist.

2. Dekorfolie (1) gemäß Anspruch 1, in der die Zahl von Wiederholungen der Wiederholungsstruktur 3 oder mehr ist.

3. Dekorfolie (1) gemäß Anspruch 1 oder 2, in der die Musterschicht (3) mindestens ein Bindemittel enthält.

4. Dekorfolie (1) gemäß mindestens einem der Ansprüche 1 bis 3, in der eine Platte (B) an einer Seite der Basismaterialschicht (2), auf der die Musterschicht (3) nicht ausgebildet ist, vorgesehen ist.

5. Dekorfolie (1) gemäß Anspruch 4, in der eine Primerschicht (6) zwischen der Platte (B) und der Musterschicht (3) vorgesehen ist.

6. Dekorfolie (1) gemäß mindestens einem der Ansprüche 1 bis 5, wobei die Dekorfolie (1) eine verdeckende Schicht (8) umfasst.

7. Dekorfolie (1) gemäß Anspruch 6, in der die verdeckende Schicht (8) zwischen der Platte (B) und der Oberflächenschutzschicht (5) vorgesehen ist.

8. Dekorfolie (1) gemäß Anspruch 6, in der die verdeckende Schicht (8) zwischen der Basismaterialschicht (2) und der Primerschicht (6) vorgesehen ist.

9. Dekorfolie (1) gemäß mindestens einem der Ansprüche 1 bis 8, in der eine transparente Schicht (4) auf einer Seite der Oberflächenschutzschicht (5), auf der die unregelmäßige Form nicht gebildet ist, vorgesehen ist.

10. Dekorfolie (1) gemäß mindestens einem der Ansprüche 1 bis 8, in der eine Klebeschicht (7) zwischen der Musterschicht (3) und der transparenten Harzschicht (4) vorgesehen ist.

11. Dekorfolie (1) gemäß mindestens einem der Ansprüche 1 bis 10, in der eine Dicke der Oberflächenschutzschicht (5) innerhalb eines Bereichs von 2 $\mu$m oder mehr und 20 $\mu$m oder weniger liegt.

12. Dekorfolie (1) gemäß mindestens einem der Ansprüche 1 bis 11, in der die Oberflächenschutzschicht (5) Partikel mit einer durchschnittlichen Partikelgröße von 10 $\mu$m oder weniger enthält.

13. Dekorfolie (1) gemäß mindestens einem der Ansprüche 1 bis 12, in der das Glanzniveau der Oberflächenschutzschicht (5) 5,0 oder weniger ist.

14. Dekorfolie (1) gemäß Anspruch 4, in der die Musterschicht (3) und die Oberflächenschutzschicht (5) im Hinblick auf Designeigenschaften aufeinander abgestimmt sind.

15. Dekorfolie (1) gemäß mindestens einem der Ansprüche 1 bis 14, in der das trifunktionelle Acrylharz ein Harz ist, das Glycerol-Triacrylat, Isocyanurat-Triacrylat, Pentaerythrit-Triacrylat oder TrimethylolpropanTriacrylat enthält.

16. Dekorfolie (1) gemäß mindestens einem der Ansprüche 1 bis 14, in der die Musterschicht (3) Pigmente oder Farbmittel, die Farbstoffe einschließen, enthält.

17. Dekorfolie (1) gemäß mindestens einem der Ansprüche 9 bis 16, in der die transparente Schicht (4) ein Harz auf Olefin-Basis enthält.

**Revendications**

1. Feuille décorative (1) comprenant :

   une couche de matériau de base (2) ;
   une couche protectrice de surface (5) prévue sur une surface de la couche de matériau de base (2) ; et
   une couche à motif (3) prévue entre la couche de matériau de base (2) et la couche protectrice de surface (5),

   dans laquelle

   la couche protectrice de surface (5) présente des parties similaires à des nervures (5B) prévues pour faire saillie en une forme similaire à une nervure et former une forme irrégulière sur une surface, **caractérisée en ce que** RSm/Ra de la forme irrégulière de la couche protectrice de surface se trouve dans une plage de 10 ou plus et 300 ou moins,
   la couche protectrice de surface (5) contient une résine durcissable par rayonnement ionisant en tant qu'un matériau principal,
   la résine durcissable par rayonnement ionisant contient, en tant qu'un composant principal, une résine acrylique trifonctionnelle contenant une structure répétitive, et
   la structure répétitive est l'une quelconque des structures d'oxyde d'éthylène, d'oxyde de propylène et d'ε-caprolactone.

2. Feuille décorative (1) selon la revendication 1,
   dans laquelle un nombre de répétitions de la structure répétitive est 3 ou plus.

3. Feuille décorative (1) selon la revendication 1 ou 2, dans laquelle la couche à motif (3) contient au moins un liant.

4. Feuille décorative (1) selon l'une quelconque des revendications 1 à 3,
   dans laquelle un panneau (B) est prévu dans un côté de la couche de matériau de base (2) sur lequel la couche à motif (3) n'est pas formée.

5. Feuille décorative (1) selon la revendication 4, dans laquelle une couche primaire (6) est prévue entre le panneau (B) et la couche à motif (3).

6. Feuille décorative (1) selon l'une quelconque des revendications 1 à 5,
   dans laquelle la feuille décorative (1) comprend une couche de dissimulation (8).

7. Feuille décorative (1) selon la revendication 6,
   dans laquelle la couche de dissimulation (8) est prévue entre le panneau (B) et la couche protectrice de surface (5).

8. Feuille décorative (1) selon la revendication 6, dans laquelle la couche de dissimulation (8) est prévue entre la couche de matériau de base (2) et la couche primaire (6).

9. Feuille décorative (1) selon l'une quelconque des revendications 1 à 8,
   dans laquelle une couche transparente (4) est prévue dans un côté de la couche protectrice de surface (5) sur lequel la forme irrégulière n'est pas formée.

10. Feuille décorative (1) selon l'une quelconque des revendications 1 à 8,
    dans laquelle une couche adhésive (7) est prévue entre la couche à motif (3) et la couche de résine transparente (4).

11. Feuille décorative (1) selon l'une quelconque des revendications 1 à 10,
    dans laquelle une épaisseur de la couche protectrice de surface (5) se trouve dans une plage de 2 $\mu$m ou plus et 20 $\mu$m ou moins.

12. Feuille décorative (1) selon l'une quelconque des revendications 1 à 11,

dans laquelle la couche protectrice de surface (5) contient des particules présentant une taille de particule moyenne de 10 μm ou moins.

13. Feuille décorative (1) selon l'une quelconque des revendications 1 à 12, dans laquelle un niveau de brillance de la couche protectrice de surface (5) est 5,0 ou moins.

14. Feuille décorative (1) selon la revendication 4, dans laquelle la couche à motif (3) et la couche protectrice de surface (5) sont synchronisées du point de vue des propriétés de conception.

15. Feuille décorative (1) selon l'une quelconque des revendications 1 à 14,

   dans laquelle la résine acrylique trifonctionnelle est une résine contenant du triacrylate de glycérol, du triacrylate d'isocyanurate, ou du triacrylate de triméthylolpropane.

16. Feuille décorative (1) selon l'une quelconque des revendications 1 à 14,

   dans laquelle la couche à motif (3) contient des pigments ou des colorants incluant des teintures.

17. Feuille décorative (1) selon l'une quelconque des revendications 9 à 16, dans laquelle la couche transparente (4) inclut une résine à base d'oléfine.

# FIG. 1

# FIG. 2

# FIG. 3

# FIG. 4

FIG. 5A

IRRADIANCE

START OF
IRRADIATION          END

FIG. 5C

IRRADIANCE

START OF
IRRADIATION          END

FIG. 5E

IRRADIANCE

START OF
IRRADIATION          END

FIG. 5G

IRRADIANCE

START OF
IRRADIATION          END

FIG. 5I

IRRADIANCE

START OF
IRRADIATION          END

FIG. 5B

IRRADIANCE

START OF
IRRADIATION          END

FIG. 5D

IRRADIANCE

START OF
IRRADIATION          END

FIG. 5F

IRRADIANCE

START OF
IRRADIATION          END

FIG. 5H

IRRADIANCE

START OF
IRRADIATION          END

FIG. 5J

IRRADIANCE

START OF
IRRADIATION          END

EP 4 563 369 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A
- KR 20200031282 A
- KR 20200059905 A
- JP 2020111715 A